# EUROPÄISCHE PATENTSCHRIFT

(11) **EP 4 104 979 B1**
(45) Veröffentlichungstag und Bekanntmachung des Hinweises auf die Patenterteilung: **08.07.2026**
(21) Anmeldenummer: 22175279.3
(22) Anmeldetag: 25.05.2022
(51) Int. Cl.: B25J 9/16, B66F 9/06, B66F 9/075

(54) **VERFAHREN ZUR AUTOMATISCHEN KOMMISSIONIERUNG UND MOBILER KOMMISSIONIERROBOTER**
METHOD FOR AUTOMATIC PICKING AND MOBILE PICKING ROBOT
PROCÉDÉ DE PRÉPARATION AUTOMATIQUE DE COMMANDES ET ROBOT MOBILE DE PRÉPARATION DE COMMANDES

(30) Priorität: 15.06.2021 DE 102021115473
(43) Veröffentlichungstag der Anmeldung: 21.12.2022
(73) Patentinhaber: Linde Material Handling GmbH, 63743 Aschaffenburg (DE)
(72) Erfinder: TREBER, Florian, 63739 Aschaffenburg (DE); KRUMBHOLZ, Peter, 63869 Jakobsthal (DE); BROCKEL, Sascha, 63906 Erlenbach a. Main (DE); GROH, Jonas, 63743 Aschaffenburg (DE)
(74) Vertreter: Patentship Patentanwaltgesellschaft

(56) Entgegenhaltungen:
- EP-A1- 2 255 930
- CN-A- 111 300 422
- DE-A1- 102017 129 464
- DE-A1- 102020 101 767

## Beschreibung

Die Erfindung betrifft ein Verfahren zur automatischen Kommissionierung von Stückgütern mit einem mobilen Kommissionierroboter, der über eine Handhabungseinrichtung mit einem Greifsystem zum Greifen der Stückgüter verfügt, wobei nach dem Greifen des Stückguts eine Greifpunktbestimmung durchgeführt wird, wobei ein Soll-Greifpunkt des gegriffenen Stückguts mit einem gemessenen Ist-Greifpunkt des gegriffenen Stückguts abgeglichen wird.

Außerdem betrifft die Erfindung einen mobilen Kommissionierroboter zur Durchführung des Verfahrens.

Unter Kommissionierung versteht man alle Methoden zur Zusammenstellung von bestimmten Objekten, insbesondere von Stückgütern, beispielsweise Packstücken, in Warenlagern, aus einem bereitgestellten Gesamtsortiment. Dabei soll die Zusammenstellung aufgrund von Aufträgen, zum Beispiel Kundenaufträgen oder Produktionsaufträgen erfolgen. In jüngster Zeit werden hierfür vermehrt automatische Systeme eingesetzt. Dabei werden zum Beispiel Packstücke als zu kommissionierende Objekte von autonom oder automatisiert betriebenen Transportfahrzeugen von einer Quellposition, insbesondere einem Quell-Ladungsträger, zum Beispiel einer Quellpalette, aufgenommen und auf einem auf dem Kommissionierfahrzeug transportierten Ziel-Ladungsträger, zum Beispiel einer Zielpalette, abgesetzt. Insbesondere werden hierzu mobile Kommissionierroboter verwendet, die die Packstücke selbstständig mittels Roboterarmen von einem Quell-Ladungsträger aufnehmen und anschließend auf einen Ziel-Ladungsträger ablegen können. Diese Kommissionierroboter erhalten die Auftragsdaten wie Auftragsnummer, Koordinaten des Lagerortes, Stückzahl und Gewicht der aufzunehmenden Stückgüter automatisch von einem Zentralrechner. Die mobilen Kommissionierroboter können zum Beispiel bestimmte Regalfächer in Regallagern eines Warenlagers gezielt anfahren und das gewünschte Stückgut mithilfe eines ein Aufnahmewerkzeug aufweisenden Greifsystems aus dem Regalfach entnehmen. Das Aufnahmewerkzeug kann als Greifer, beispielsweise als Adhäsionsgreifer oder Vakuumgreifer, ausgebildet sein. Der Mittelpunkt des jeweiligen Greifsystems wird als Tool-Center-Point (TCP) bezeichnet. Das Greifen der Objekte wird auch als Picken bezeichnet. Das Transferieren der Packstücke von der Quellpalette zur Zielpalette wird auch als Pick & Place - Prozess bezeichnet.

Aus der DE 10 2017 130 577 A1 ist beispielsweise ein mobiler Kommissionierroboter zur automatischen Kommissionierung von Objekten mit einem vertikal ausgerichteten Hubmast und einem daran höhenbeweglich angebrachten, horizontal ausgerichteten Roboterarm mit mehreren aneinander gereihten Armelementen bekannt, welche über Armgelenke mit vertikalen Armgelenksdrehachsen verfügen, wobei das letzte am äußeren Reihenende angeordnete Armelement über ein Handgelenk mit vertikaler Handgelenksdrehachse mit einem Aufnahmewerkzeug zur Aufnahme der Objekte verbunden ist.

Im Rahmen der autonomen Kommissionierung ist es erforderlich, Stückgüter innerhalb eines Warenlagers zu erkennen sowie deren Pose, also Lage und Orientierung, zu bestimmen, um zur Aufnahme des entsprechenden Stückgutes eine gezielte Greifbewegung mit Hilfe der Handhabungseinrichtung, die häufig auch als Lasthandhabungsmanipulator bezeichnet wird, zu ermöglichen. Die Stückgüter befinden sich dabei auf Ladungsträgern, die im Folgenden als Quellpaletten bezeichnet werden, innerhalb von Lagerregalen mit mehreren Ebenen. Um die entsprechende Kommission zusammenzustellen, gilt es die am jeweiligen Regalplatz benötigte Anzahl an Stückgütern zu entnehmen und auf einem auftragsbezogenen Ladungsträger, der im Folgenden als Zielpalette bezeichnet wird, abzulegen. Die Quellpaletten, auf welchen die zu greifenden Stückgüter gelagert sind, sind homogen, das heißt, es befindet sich lediglich eine Sorte Stückgüter auf einer Quellpalette.

Um den Griff eines aufzunehmenden Stückgutes durch den Lasthandhabungsmanipulator zu ermöglichen, ist es zwingend erforderlich, genaue Greifpunkte der auf dem Quell-Ladungsträger befindlichen Stückgüter zu ermitteln. Dazu müssen die aufzunehmenden Stückgüter sowohl erkannt als auch deren Pose, bestehend aus Lage und Orientierung, mit einer ausreichend hohen Genauigkeit bestimmt werden. Zudem gilt es, das am besten für den nächsten Griff geeignete Stückgut auf dem Quell-Ladungsträger auszuwählen.

Basierend auf diesen Informationen kann anschließend die Ansteuerung des Lasthandhabungsmanipulators erfolgen.

Aufgrund des mobilen Einsatzszenarios gilt es, den mobilen Kommissionierroboter mit einem System auszustatten, um die beschriebene Funktion zu erfüllen. Hierzu kann der Kommissionierroboter mit einem Stückgüterkennungssystem ausgestattet sein, das über ein Bildverarbeitungssystem, ein so genanntes Vision-System, verfügt, mit dem die auf dem Quell-Ladungsträger gestapelten Stückgüter erkannt werden können.

Die Zielpositionen der zu platzierenden Stückgüter auf dem Ziel-Ladungsträger werden vor dem eigentlich Pick & Place - Prozess durch einen geeigneten Algorithmus, beispielsweise durch einen Packmustergenerator, vorberechnet. Diese vorbestimmten Positionen der auf der Zielpalette zu platzierenden Stückgüter sind während des Prozesses möglichst genau einzuhalten. Ist dies nicht der Fall, kann das vorbestimmte Packmuster des Ziel-Ladungsträgers eventuell nicht mehr realisiert werden, und im schlechtesten Szenario könnte es zu einer Kollision kommen.

Es ist damit zu rechnen, dass während des Pick-Vorgangs gewisse Abweichungen zwischen Soll-Greifpunkt und Ist-Greifpunkt entstehen. Diese können zum einen durch das Vision-System zur Stückguterkennung entstehen, da die vorgegebene Position, welche durch die Bilderkennung berechnet wurde, von der Realität abweichen kann.

Eine weitere Fehlerquelle stellt die eigentliche Aufnahme des Stückgutes mittels des jeweiligen Greifsystems dar. Je nach Beschaffenheit des Stückgutes entstehen weitere Toleranzen durch Verformung des Stückgutes bei der Aufnahme, sowie bei der Ablage. Je nach Auslenkung der Roboterarmkinematik entstehen weitere mögliche Toleranzen durch Regelabweichungen der Steuerung und mechanisch bedingte Abweichungen.

Durch all diese möglichen Fehlerquellen kann es zu einer entsprechenden Abweichung zwischen Soll-Greifpunkt und Ist-Greifpunkt kommen, welche einen weiteren Prozessablauf verhindert oder zumindest erschwert.

Aus der DE 10 2017 129 464 A1 ist ein gattungsgemäßes Verfahren zur automatischen Kommissionierung von Stückgütern mit einem mobilen

Kommissionierroboter, der über eine Handhabungseinrichtung mit einem Greifsystem zum Greifen der Stückgüter verfügt, mit den Merkmalen des Oberbegriffs des Patentanspruchs 1 bekannt.

Die DE 10 2020 101 767 A1 offenbart ein Steuerverfahren für ein Robotersystem, das ein hohes Maß an Kooperation zwischen Einheiten einschließlich eines Roboters implementiert und die Lagerungseffizienz eines Aktionsobjekts erhöht.

Die EP 2 255 930 A1 offenbart ein Verfahren zum hochpräzisen Positionieren eines Objekts in eine Endlage in Montage- oder Fertigungsvorgängen in automatisierten Fertigungsstraßen, beispielsweise in der Automobilindustrie.

Aus CN 111 300 422 A ist ein Kompensationsverfahren für den Posenfehler eines Roboter-Werkstückgreifens basierend auf einem mit einer Kamera erfassten visuellen Bild bekannt.

Der vorliegenden Erfindung liegt die Aufgabe zugrunde, ein Verfahren der genannten Art sowie einen mobilen Kommissionierroboter zur Durchführung des Verfahrens so auszugestalten, dass eine automatisierte Kommissionierung mit hoher Genauigkeit ermöglicht wird.

Die Erfindung wird durch den beigefügten Anspruchssatz definiert.

Diese Aufgabe wird verfahrensseitig erfindungsgemäß dadurch gelöst, dass das gegriffene Stückgut durch Auslenkung der Handhabungseinrichtung in einer horizontalen Ebene in Richtung einer x-Koordinate des Stückguts und senkrecht dazu in Richtung einer y-Koordinate des Stückguts jeweils durch Anschlag an eine kalibrierte mechanische Vorrichtung in eine kalibrierte Endlage gebracht wird, wobei die Endlage jeweils mittels einer Sensorik detektiert wird, die Soll-Lage des Stückguts aus der bekannten Auslenkung der Handhabungseinrichtung und der bekannten Stückgutdimension bestimmt wird, die Ist-Lage des Stückguts durch Auswertung der Sensorsignale der Sensorik bestimmt wird, die Ist-Lage des Stückguts mit der Soll-Lage des Stückguts verglichen wird und daraus die Abweichung des Ist-Greifpunkts vom Soll-Greifpunkt errechnet wird, wobei als Sensorik eine taktile Sensorik verwendet wird und wobei die Auslenkung eines, zwischen einem äußeren Armteil eines Roboterarms der Handhabungseinrichtung und dem Greifsystem vorgesehenen,

Ausgleichselements mittels der Sensorik gemessen wird.

Nachdem ein Stückgut mit dem Greifsystem aufgenommen wurde, kann der Mittelpunkt des Greifsystems, also der Tool-Center-Point (TCP), an eine beliebige Position innerhalb des Roboter-Koordinatensystems positioniert werden. Diese Positionierung ist im Millimeterbereich wiederholgenau durchführbar. An dieser Position kann eine Messung des Ist-Greifpunkts, also eine Relativpositionierung des Tool-Center-Points relativ zum Stückgut, mit der Sensorik durchgeführt werden.

Durch die Stellung der Handhabungseinrichtung, insbesondere des Roboterarms, ist eine Soll-Lage des gegriffenen Stückgutes im Raum bekannt. Diese beiden Positionen können verglichen werden, und daraus kann eine Abweichung des Greifpunkts errechnet werden.

Die daraus resultierende Abweichung kann nun in die verbleibende Bahnplanung des Roboterarms und den eigentlichen Ablageprozess mit einberechnet werden.

Gemäß der Erfindung ist vorgesehen, dass das gegriffene Stückgut durch Auslenkung der Handhabungseinrichtung in einer horizontalen Ebene in Richtung einer x-Koordinate des Stückguts und senkrecht dazu in Richtung einer y-Koordinate des Stückguts jeweils in eine kalibrierte Endlage gebracht wird, wobei die Endlage jeweils mittels einer Sensorik detektiert wird, die Soll-Lage des Stückguts aus der bekannten Auslenkung der Handhabungseinrichtung und der bekannten Stückgutdimension bestimmt wird, die Ist-Lage des Stückguts durch Auswertung der Sensorsignale der Sensorik bestimmt wird, die Ist-Lage des Stückguts mit der Soll-Lage des Stückguts verglichen wird und daraus die Abweichung des Ist-Greifpunkts vom Soll-Greifpunkt errechnet wird.

Die Bestimmung des Ist-Greifpunkts erfolgt hierbei mit einer taktilen Sensorik, beispielsweise einem oder mehreren Endlagenschaltern.

Das Erreichen der Endlage wird auch mittels der taktilen Sensorik detektiert.

Das gegriffene Stückgut wird durch Anschlag an eine kalibrierte mechanische Vorrichtung in die kalibrierte Endlage gebracht. Hierzu ist die Verwendung eines Ausgleichselements vorgesehen, welches zwischen einem äußeren Armteil eines Roboterarms der Handhabungseinrichtung und dem Greifsystem vorgesehen ist. Dabei wird die Auslenkung des Ausgleichselements beim Anschlag an die mechanische Vorrichtung mittels der Sensorik gemessen.

Die Erfindung kann auch zur Vermessung der tatsächlichen Abmaße des gegriffenen Stückguts eingesetzt werden. Auch zur Qualitätskontrolle kann die Erfindung verwendet werden, insbesondere zur Feststellung der Frage, ob ein gegriffenes Packstück defekt ist.

Die Erfindung betrifft ferner einen mobilen Kommissionierroboter zur Durchführung des Verfahrens, wobei der Kommissionierroboter über eine Handhabungseinrichtung mit einem Greifsystem zum Greifen der Stückgüter sowie über eine Sensorik und eine, mit der Sensorik in Wirkverbindung stehende, Datenverarbeitungseinrichtung verfügt, wobei die Sensorik zur Vermessung des Stückguts ausgebildet ist und die Datenverarbeitungseinrichtung dazu eingerichtet ist, eine Greifpunktbestimmung durchzuführen, wobei ein in der Datenverarbeitungseinrichtung vorbestimmter Soll-Greifpunkt des gegriffenen Stückguts mit einem, von der Sensorik gemessenen, Ist-Greifpunkt des gegriffenen Stückguts abgeglichen wird.

Beim mobilen Kommissionierroboter wird die gestellte Aufgabe erfindungsgemäß dadurch gelöst, dass die Sensorik eine taktile Sensorik umfasst, wobei eine kalibrierte Endlage vorgesehen ist, in die das gegriffene Stückgut jeweils durch Auslenkung der Handhabungseinrichtung in einer horizontalen Ebene in Richtung einer x-Koordinate des Stückguts und senkrecht dazu in Richtung einer y-Koordinate des Stückguts gebracht werden kann, wobei die Sensorik im Bereich der Endlage angeordnet ist, wobei die kalibrierte Endlage als mechanische Vorrichtung ausgebildet ist, mit der das gegriffene Stückgut durch Auslenkung der Handhabungseinrichtung in Anschlag gebracht werden kann, wobei die Handhabungseinrichtung über einen Roboterarm verfügt, zwischen dem Roboterarm und dem Greifsystem ein Ausgleichselement angeordnet ist, welches Relativbewegungen zwischen dem Roboterarm und dem Greifsystem ermöglicht, und die Sensorik im Bereich des Ausgleichselements angeordnet und dazu ausgebildet ist, Auslenkungen des Ausgleichselements zu messen.

Die Sensorik umfasst eine taktile Sensorik.

Gemäß der Erfindung ist eine kalibrierte Endlage vorgesehen, in die das gegriffene Stückgut jeweils durch Auslenkung der Handhabungseinrichtung in einer horizontalen Ebene in Richtung einer x-Koordinate des Stückguts und senkrecht dazu in Richtung einer y-Koordinate des Stückguts gebracht werden kann, wobei die Sensorik im Bereich der Endlage angeordnet ist.

Dabei ist die kalibrierte Endlage als mechanische Vorrichtung ausgebildet, mit der das gegriffene Stückgut durch Auslenkung der Handhabungseinrichtung in Anschlag gebracht werden kann, wobei die Handhabungseinrichtung über einen Roboterarm verfügt, zwischen dem Roboterarm und dem Greifsystem ein Ausgleichselement angeordnet ist, welches Relativbewegungen zwischen dem Roboterarm und dem Greifsystem ermöglicht, und die Sensorik im Bereich des Ausgleichselements angeordnet und dazu ausgebildet ist, Auslenkungen des Ausgleichselements zu messen.

Die Erfindung bietet eine ganze Reihe von Vorteilen:
Die Robustheit des Ablageprozesses wird erhöht, da der tatsächliche Greifpunkt eines mit dem Greifsystems gegriffenen Stückgutes mit in die Bewegungsplanung einberechnet werden kann.

Dadurch ist es möglich, das gegriffene Packstück auch in sehr enge Bereiche in das vorberechnete Packmuster des Ziel-Ladungsträgers abzulegen. Somit kann das Packmuster mit einer niedrigeren Toleranz berechnet werden, was wiederrum zu einer besseren Raumausnutzung und Stabilität führt.

Die Erfindung ermöglicht eine adaptive Bewegungsplanung anhand der StückgutDimension und des tatsächlichen Greifpunkts, wobei eine Trajektorie im 3D-Raum dynamisch berechnet werden kann. Dadurch werden komplexe Bewegungen möglich, so dass auch große Paketgrößen dynamisch und kollisionsfrei von A nach B transportiert werden können.

Bei Vermessung ausreichend vieler Merkmale des gegriffenen Packstückes, zum Beispiel der unteren vier Ecken bei Verwendung der optischen Sensorik, kann die Toleranz beim Greifen in noch mehr Freiheitsgraden bestimmt werden. Hierzu gehört zum Beispiel eine Verdrehung um die Hochachse z.

Schließlich ermöglicht die Erfindung auch eine höhere Prozessverfügbarkeit, da die Häufigkeit von möglichen Kollisionen bei der Ablage eines gegriffenen Packstückes reduziert wird. Eine mögliche Kollision hätte immer einen Eingriff oder eine Umplanung zur Folge.

Weitere Vorteile und Einzelheiten der Erfindung werden anhand der in den schematischen Figuren dargestellten Ausführungsbeispiele näher erläutert. Hierbei zeigen
- Figur 1: einen mobilen Kommissionierroboter und eine Quellpalette sowie eine Zielpalette,
- Figur 2: eine Darstellung einer Greifpunktbestimmung mit einer optischen Sensorik,
- Figur 3: eine Darstellung verschiedener Anbaupositionen für den optischen Sensor,
- Figur 4: eine Darstellung einer Greifpunktbestimmung mit Anschlag des Stückguts mit der Breitseite an einer mechanischen Vorrichtung,
- Figur 5: eine Darstellung einer Greifpunktbestimmung mit Anschlag des Stückguts mit der Längsseite an einer mechanischen Vorrichtung,
- Figur 6: eine Darstellung einer Greifpunktbestimmung mit einer berührungslosen Sensorik in einer Ausgangsposition des Roboterarms,
- Figur 7: eine Darstellung einer Greifpunktbestimmung mit einer berührungslosen Sensorik in einer Mess-Position des Roboterarms zur Messung der x-Koordinate des Stückguts und
- Figur 8: eine Darstellung einer Greifpunktbestimmung mit einer berührungslosen Sensorik in einer Mess-Position des Roboterarms zur Messung der y-Koordinate des Stückguts.

In den Figuren sind dieselben Merkmale jeweils mit denselben Bezugsziffern versehen.

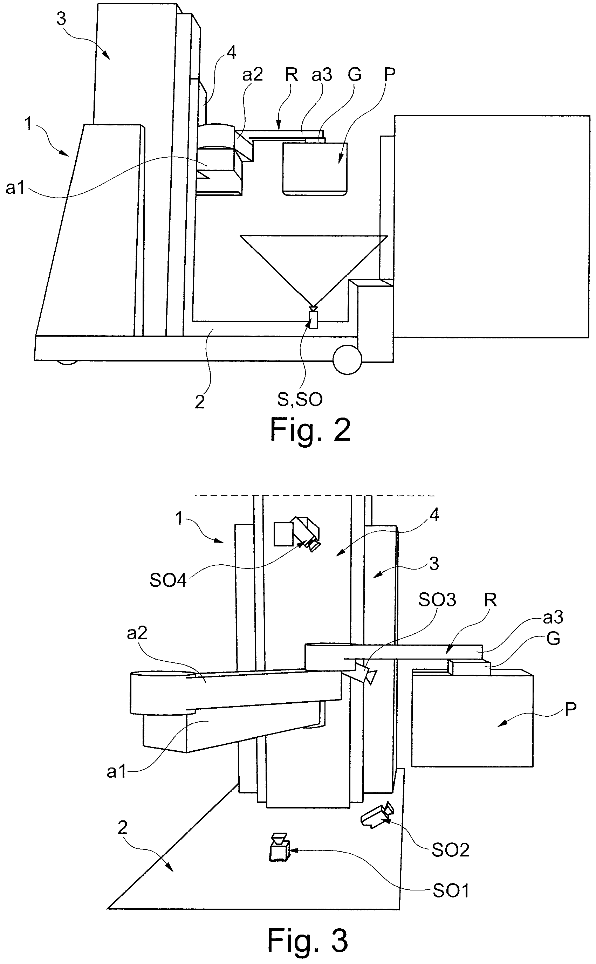

Die Beispiele der Figuren 2, 3, 6, 7 und 8 sind nicht erfindungsgemäß und dienen lediglich der Veranschaulichung.

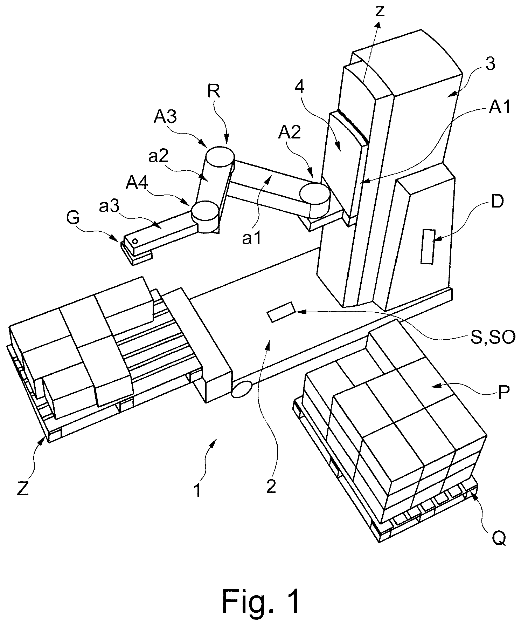

Die Figuren 1 bis 8 zeigen alle einen mobilen Kommissionierroboter 1 mit einer als Roboterarm R ausgebildeten Handhabungseinrichtung R.

Die Figur 1 zeigt den mobilen Kommissionierroboter 1 in einer perspektivischen Darstellung. Seitlich neben dem Kommissionierroboter 1 befindet sich ein als Quellpalette Q ausgebildeter Quell-Ladungsträger Q. Der als Zielpalette Z ausgebildete Ziel-Ladungsträger Z ist auf dem Kommissionierroboter 1 angeordnet und kann mit diesem bewegt werden. In der Regel werden bei einem Einsatz in Lagerhäusern mehrere Quellpaletten Q verwendet.

Der Kommissionierroboter 1 verfügt über eine mobile (fahrende) autonome Plattform 2, auf der ein vertikal ausgerichteter Hubmast 3 mit einem daran höhenbeweglich angebrachten Hubschlitten 4 befestigt ist. Am Hubschlitten 4 ist der horizontal ausgerichtete Roboterarm R angebracht, der aus drei Armelementen a1, a2, a3 zusammengesetzt ist. Die drei Armelemente a1, a2, a3 sind über vertikal ausgerichtete Armgelenksdrehachsen A3 und A4 gelenkig miteinander verbunden. Das erste Armelement a1 ist über die vertikal ausgerichtete Armgelenksdrehachse A2 am Hubschlitten 4 befestigt und kann mit diesem vertikal entlang der Hubachse A1 des Hubmastes 3 in z-Richtung bewegt werden. An dem letzten Armelement a3 ist ein Greifsystem G angeordnet. Die Armelemente a1, a2, a3 sind untereinander oder übereinander angeordnet und bilden eine flache Kinematik des Roboterarms R.

Das Greifsystem G kann je nach Anwendung unterschiedliche Techniken zum Greifen von Stückgütern P verwenden. Beispielsweise kann das Greifsystem G einen VakuumGreifer oder einen Adhäsionsgreifer umfassen.

Nachdem ein Stückgut P, zum Beispiel ein Paket, mit dem Greifsystem G von dem Quell-Ladungsträger Q aufgenommen wird, kann der Tool-Center-Point (TCP) des Greifsystems G an eine beliebige Position innerhalb des Roboter-Koordinatensystems positioniert werden. Diese Positionierung ist im Millimeterbereich wiederholgenau durchführbar. Dadurch kann eine Messung des Ist-Greifpunkts, also eine Relativpositionierung des Tool-Center-Points des Greifsystems G relativ zum gegriffenen Stückgut P mit einer geeigneten Sensorik S durchgeführt werden.

Die Sensorik S umfasst im vorliegenden, nicht zur Erfindung gehörenden Fall einen optischen Sensor SO, der auf einer Plattform 2 des Kommissionierroboters 1 unterhalb des Roboterarms R angebracht ist. Die Sensordaten der Sensorik S werden in einer im Flurförderzeug 1 untergebrachten Datenverarbeitungseinheit D ausgewertet.

Die Funktionsweise der Greifpunktbestimmung wird im Zusammenhang mit den Figuren 2 bis 8 näher erläutert.

Die Figur 2 zeigt eine Darstellung der Greifpunktbestimmung mit dem optischen Sensor SO. Als optischer Sensor SO wird im vorliegenden Ausführungsbeispiel eine 2D-Kamera oder eine 3D-Kamera verwendet. Der optische Sensor SO ist unterhalb des Roboterarms R auf dem Kommissionierroboter 1 angebracht und ist so ausgerichtet, dass er nach oben schauend das mit dem Greifsystem G gegriffene Stückgut P von unten scannen kann. Dabei kann das Sichtfeld, also das Field-Of-View, des optischen Sensors SO die komplette Unterseite des Stückguts P komplett abdecken.

Der Roboterarm R mit dem von dem Greifsystem G am Soll-Greifpunkt gegriffenen Stückgut P wird in eine Messposition in das Field-Of-View des optischen Sensors SO gefahren.

An dieser Messposition wird die Ist-Lage des Stückguts P im Raum, also im Absolutsystem des Kommissionierroboters 1, mit dem optischen Sensor SO vermessen.

Durch die Stellung des Roboterarms R an der Messposition ist eine Soll-Lage des Stückguts P im Raum bekannt. Diese beiden Positionen (Soll-Lage / Ist-Lage des Stückgutes P) können verglichen werden, und daraus kann eine Abweichung des Ist-Greifpunkts vom Soll-Greifpunkt des Greifsystems G errechnet werden.

Die daraus resultierende Abweichung kann nun in die verbleibende Bahnplanung des Roboterarms R und den eigentlichen Ablageprozess mit einberechnet werden.

Die Figur 3 zeigt eine Darstellung verschiedener Anbaupositionen für den optischen Sensor SO. Die Position SO1 entspricht der Darstellung der Figur 2. Alternativ oder zusätzlich kann der optische Sensor SO auch mit schräger Ausrichtung außerhalb der Mitte der Plattform 2 an einer Fahrzeugkontur des Kommissionierroboters 1 an einer Position SO2 angebracht sein. Ebenso kann der optische Sensor SO direkt an dem letzten Armelement a3 des Roboterarm R an einer Position SO3 oder an dem Hubschlitten 4 des vertikalen Hubmastes 3 an einer Position SO4 mithilfe eines Auslegers montiert werden.

In allen Positionen sollte die Ausrichtung des optischen Sensors SO und das Sichtfeld, also das Field-Of-View (FOV), des optischen Sensors SO so gewählt werden, dass die komplette Dimension des Stückguts P in der jeweiligen Armstellung des Roboterarms R für den optischen Sensor SO sichtbar ist.

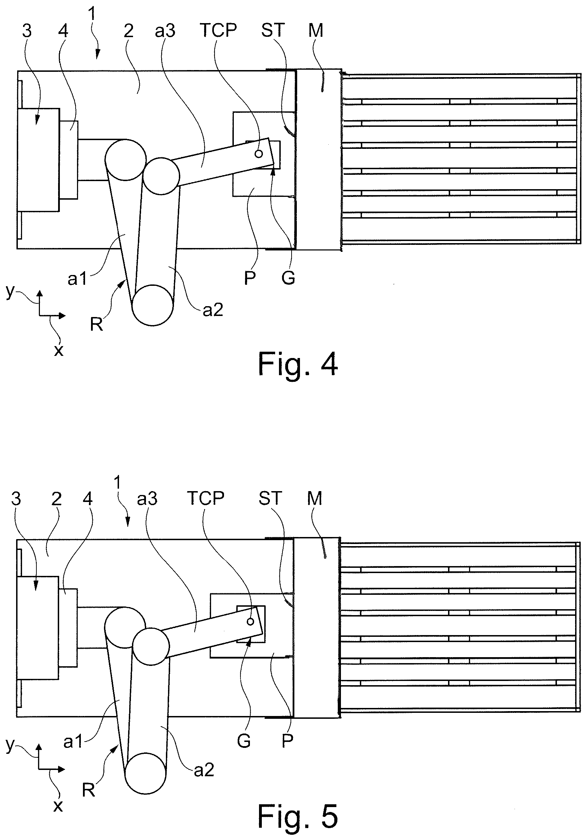

Die Figur 4 zeigt eine Darstellung einer Greifpunktbestimmung mit Anschlag des Stückguts P mit seiner Breitseite an einer kalibrierten mechanischen Vorrichtung M, während die Figur 5 eine Darstellung der Greifpunktbestimmung mit Anschlag des Stückguts P mit seiner Längsseite an der kalibrierten mechanischen Vorrichtung M zeigt. Die Position und Form der mechanischen Vorrichtung M ist nicht auf das in den Figuren 4 und 5 dargestellte Ausführungsbeispiel beschränkt. Die mechanische Vorrichtung M kann auch an anderer Position und/oder anderer Form innerhalb des mobilen Kommissionierroboters vorhanden sein.

Der Ablauf der Greifpunktbestimmung erfolgt dabei folgendermaßen:
a) Voraussetzung: Die Dimension des Stückguts P, also Breite (x-Koordinate) und Tiefe (y-Koordinate), ist bekannt.
b) Der Roboterarm R wird soweit in Richtung der mechanischen Vorrichtung M ausgelenkt, bis das Stückgut P an der mechanischen Vorrichtung M mit seiner Breitseite anschlägt.
c) Im vorliegenden Fall ist am Roboterarm R ein Ausgleichselement verbaut, welches Relativbewegungen zwischen dem Roboterarm R und dem Greifsystem G zulässt, die von einer Sensorik gemessen werden. Falls der Ist-Greifpunkt vom Soll-Greifpunkt abweicht, so kann dies durch eine Auslenkung des Ausgleichselements beim Anschlag des Stückguts P an der mechanischen Vorrichtung M erkannt werden. Ist beispielsweise das Stückgut P in der gezeigten Darstellung nach rechts vom Tool-Center-Point TCP des Greifsystems G verschoben, so lenkt der Roboterarm R nach der Soll-Auslenkung über den Anschlag des Stückguts P hinaus aus, so dass das Ausgleichselement wegen des Anschlags des Stückguts P an der mechanischen Vorrichtung M zu einer Gegen-Auslenkung gezwungen wird. Die Gegen-Auslenkung des Ausgleichselements ergibt den Unterschied zwischen Ist-Greifpunkt und dem Soll-Greifpunkt bezüglich der y-Koordinate des Stückguts P: Delta TCP (y) = aktuelle TCP-Position minus y-Position der mechanischen Vorrichtung M.
d) Das Stückgut P wird mittels des Greifsystems um 90 Grad in der horizontalen Ebene gedreht.
e) Nun wird der Roboterarm R soweit in Richtung der mechanischen Vorrichtung M ausgelenkt, bis das Stückgut P an der mechanischen Vorrichtung M mit seiner Längsseite anschlägt.
f) Falls der Ist-Greifpunkt vom Soll-Greifpunkt auch bezüglich der x-Koordinate des Stückguts P abweicht, so kann dies wiederum durch eine Auslenkung des Ausgleichselements beim Anschlag des Stückguts P an der mechanischen Vorrichtung M erkannt werden: Delta TCP (x) = aktuelle TCP-Position minus x-Position der mechanischen Vorrichtung M.
g) Aus den Abweichungen bezüglich y-Koordinate und x-Koordinate kann der aktuelle Greifpunkt final berechnet werden.

Denkbar ist in den Figuren 4, 5 auch die Verwendung einer taktilen Sensorik ST, beispielsweise ein Endlagenschalter oder beispielsweise eine Kombination von mehreren Endlageschaltern, die den Anschlag des Stückguts P an der mechanischen Vorrichtung M detektieren.

Der Ablauf der Greifpunktbestimmung erfolgt bei Verwendung einer taktilen Sensorik ST folgendermaßen:
a) Voraussetzung: Die Dimension des Stückguts P, also Breite (x-Koordinate) und Tiefe (y-Koordinate), ist bekannt.
b) Der Roboterarm R wird soweit in Richtung der mechanischen Vorrichtung M ausgelenkt, bis das Stückgut P mit seiner Längsseite an die kalibrierte taktile Sensorik ST heranfährt.
c) Die Abweichung des Ist-Greifpunktes und des Soll-Greifpunktes bezüglich der x-Koordinate ergibt sich wie folgt: Delta TCP (x) = aktuelle TCP-Position minus x-Position der taktilen Sensorik ST.
d) Das Stückgut P wird mittels des Greifsystems um 90 Grad in der horizontalen Ebene gedreht.
e) Nun wird der Roboterarm R soweit in Richtung der mechanischen Vorrichtung M ausgelenkt, bis das Stückgut P mit seiner Breitseite an die kalibrierte taktile Sensorik ST heranfährt.
f) Die Abweichung des Ist-Greifpunktes und des Soll-Greifpunktes bezüglich der y-Koordinate ergibt sich wie folgt: Delta TCP (y) = aktuelle TCP-Position minus y-Position der taktilen Sensorik ST.
g) Aus den Abweichungen bezüglich y-Koordinate und x-Koordinate kann der aktuelle Greifpunkt final berechnet werden.

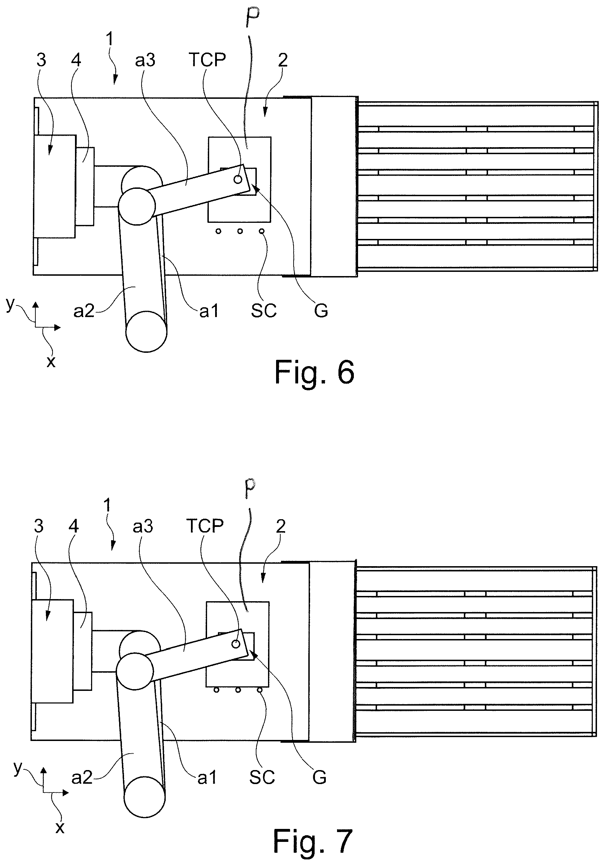

Die Figuren 6 bis 8 zeigen Darstellungen einer Greifpunktbestimmung mit einer berührungslosen, also kontaktlosen, Sensorik SC. Die berührungslose Sensorik SC kann zum Beispiel mehrere 1D-Sensoren, insbesondere Lasersensoren, Lichtschranken, Infratrotsensoren oder Ultraschallsensoren, umfassen, die zu einem Sensor-Array zusammengeschaltet sind. Die Sensorik SC kann in einem unteren Teil des Kommissionierroboters 1, beispielsweise auf der Plattform 2, montiert sein und vertikal nach oben messend ausgerichtet sein.

Zur Greifpunktbestimmung wird der Tool-Center-Point TCP des Greifsystems G mit aufgenommenem Stückgut P in Richtung der Sensorik SC bewegt, bis mindestens zwei Sensoren der Sensorik SC ein positives Signal liefern. Ist dies der Fall, wird anhand der aktuellen Position des Tool-Center-Points TCP der Ist-Greifpunkt bestimmt.

Dieser Prozess kann durch Drehung des Tool-Center-Points TCP um 90 Grad, jeweils in x-Richtung und in y-Richtung durchgeführt werden.

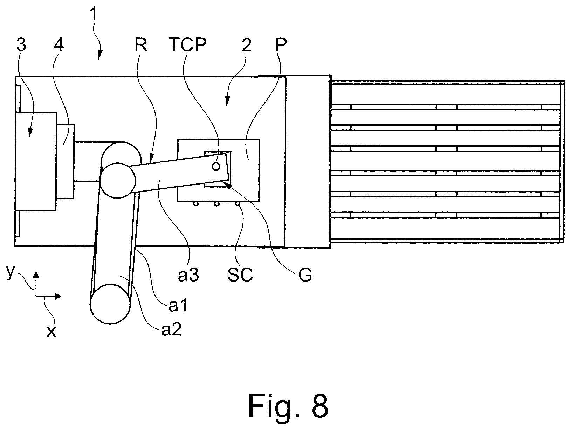

Dabei zeigt die Figur 6 den Kommissionierroboter 1 in einer Ausgangsposition des Roboterarms R, während die Figur 7 den Kommissionierroboter 1 in einer Mess-Position des Roboterarms R zur Messung der x-Koordinate des Stückguts P und somit der x-Koordinate des Ist-Greifpunktes und die Figur 8 den Kommissionierroboter 1 in einer Mess-Position des Roboterarms R zur Messung der y-Koordinate des Stückguts P und somit der y-Koordinate des Ist-Greifpunktes zeigen.

## Patentansprüche

1. Verfahren zur automatischen Kommissionierung von Stückgütern (P) mit einem mobilen Kommissionierroboter (1), der über eine Handhabungseinrichtung (R) mit einem Greifsystem (G) zum Greifen der Stückgüter (P) verfügt, wobei nach dem Greifen des Stückguts (P) eine Greifpunktbestimmung durchgeführt wird, wobei ein Soll-Greifpunkt des gegriffenen Stückguts (P) mit einem gemessenen Ist-Greifpunkt des gegriffenen Stückguts (P) abgeglichen wird, **dadurch gekennzeichnet, dass** das gegriffene Stückgut (P) durch Auslenkung der Handhabungseinrichtung (R) in einer horizontalen Ebene in Richtung einer x-Koordinate des Stückguts (P) und senkrecht dazu in Richtung einer y-Koordinate des Stückguts (P) jeweils durch Anschlag an eine kalibrierte mechanische Vorrichtung (M) in eine kalibrierte Endlage gebracht wird, wobei die Endlage jeweils mittels einer Sensorik (S) detektiert wird, die Soll-Lage des Stückguts (P) aus der bekannten Auslenkung der Handhabungseinrichtung (R) und der bekannten Stückgutdimension bestimmt wird, die Ist-Lage des Stückguts (P) durch Auswertung der Sensorsignale der Sensorik (S) bestimmt wird, die Ist-Lage des Stückguts (P) mit der Soll-Lage des Stückguts (P) verglichen wird und daraus die Abweichung des Ist-Greifpunkts vom Soll-Greifpunkt errechnet wird, wobei als Sensorik (S) eine taktile Sensorik (ST) verwendet wird und wobei beim Anschlag die Auslenkung eines, zwischen einem äußeren Armteil eines Roboterarms (R) der Handhabungseinrichtung (R) und dem Greifsystem (G) vorgesehenen, Ausgleichselements mittels der Sensorik (S) gemessen wird.

2. Mobiler Kommissionierroboter (1) zur Durchführung des Verfahrens nach Anspruch 1, wobei der Kommissionierroboter (1) über eine Handhabungseinrichtung (R) mit einem Greifsystem (G) zum Greifen der Stückgüter (P) sowie über eine Sensorik (S) und eine, mit der Sensorik (S) in Wirkverbindung stehende, Datenverarbeitungseinrichtung (D) verfügt, wobei die Sensorik (S) zur Vermessung des Stückguts (P) ausgebildet ist und die Datenverarbeitungseinrichtung (D) dazu eingerichtet ist, eine Greifpunktbestimmung durchzuführen, wobei ein in der Datenverarbeitungseinrichtung (D) vorbestimmter Soll-Greifpunkt des gegriffenen Stückguts (P) mit einem, von der Sensorik (S) gemessenen, Ist-Greifpunkt des gegriffenen Stückguts (P) abgeglichen wird, **dadurch gekennzeichnet, dass** die Sensorik (S) eine taktile Sensorik (ST) umfasst, wobei eine kalibrierte Endlage vorgesehen ist, in die das gegriffene Stückgut (P) jeweils durch Auslenkung der Handhabungseinrichtung (R) in einer horizontalen Ebene in Richtung einer x-Koordinate des Stückguts (P) und senkrecht dazu in Richtung einer y-Koordinate des Stückguts (P) gebracht werden kann, wobei die Sensorik (S) im Bereich der Endlage angeordnet ist, wobei die kalibrierte Endlage als mechanische Vorrichtung (M) ausgebildet ist, mit der das gegriffene Stückgut (P) durch Auslenkung der Handhabungseinrichtung (R) in Anschlag gebracht werden kann, wobei die Handhabungseinrichtung (R) über einen Roboterarm (R) verfügt, zwischen dem Roboterarm (R) und dem Greifsystem (G) ein Ausgleichselement angeordnet ist, welches Relativbewegungen zwischen dem Roboterarm (R) und dem Greifsystem (G) ermöglicht, und die Sensorik (S) im Bereich des Ausgleichselements angeordnet und dazu ausgebildet ist, beim Anschlag die Auslenkung des Ausgleichselements zu messen.

## Claims

1. Method for automatically picking packages (P) with a mobile picking robot (1), which has a handling device (R) with a gripping system (G) for gripping the packages (P), wherein gripping point determination is carried out after the package (P) has been gripped, wherein a target gripping point of the gripped package (P) is matched with a measured actual gripping point of the gripped package (P), **characterized in that** the gripped package (P) is moved to a calibrated end position by deflection of the handling device (R) in a horizontal plane in the direction of an x-coordinate of the package (P) and perpendicularly thereto in the direction of a y-coordinate of the package (P) by way of stopping against a calibrated mechanical device (M) in each case, wherein the end position is detected by means of a sensor system (S), the target position of the package (P) is determined from the known deflection of the handling device (R) and the known package dimension, the actual position of the package (P) is determined by evaluating the sensor signals of the sensor system (S), the actual position of the package (P) is compared with the target position of the package (P) and the deviation of the actual gripping point from the target gripping point is calculated from this, wherein a tactile sensor system (ST) is used as the sensor system (S) and wherein, in the stop position, the deflection of a compensation element provided between an outer arm part of a robot arm (R) of the handling device (R) and the gripping system (G) is measured by means of the sensor system (S).

2. Mobile picking robot (1) for carrying out the method according to Claim 1, wherein the picking robot (1) has a handling device (R) with a gripping system (G) for gripping the packages (P) and also a sensor system (S) and a data processing device (D) operatively connected to the sensor system (S), wherein the sensor system (S) is configured to measure the package (P) and the data processing device (D) is configured to carry out gripping point determination, wherein a target gripping point of the gripped package (P) predetermined in the data processing device (D) is matched with an actual gripping point of the gripped package (P) measured by the sensor system (S), **characterized in that** the sensor system (S) comprises a tactile sensor system (ST), wherein a calibrated end position is provided, to which the gripped package (P) can be moved in each case by deflecting the handling device (R) in a horizontal plane in the direction of an x-coordinate of the package (P) and perpendicular thereto in the direction of a y-coordinate of the package (P), wherein the sensor system (S) is arranged in the region of the end position, wherein the calibrated end position is designed as a mechanical device (M) with which the gripped package (P) can be brought to a stop by deflecting the handling device (R), wherein the handling device (R) has a robot arm (R), a compensation element is arranged between the robot arm (R) and the gripping system (G) and allows relative movements between the robot arm (R) and the gripping system (G), and the sensor system (S) is arranged in the region of the compensation element and is designed to measure the deflection of the compensating element in the stop position.

## Revendications

1. Procédé de préparation automatique de commandes de marchandises unitaires (P) avec un robot de préparation de commandes mobile (1), qui dispose d'un dispositif de manipulation (R) pourvu d'un système de préhension (G) destiné à saisir les marchandises unitaires (P), une détermination du point de préhension étant effectuée après la préhension de la marchandise unitaire (P), un point de préhension de consigne de la marchandise unitaire (P) saisie étant comparé à un point de préhension réel mesuré de la marchandise unitaire (P) saisie, **caractérisé en ce que** la marchandise unitaire (P) saisie est amenée, par déviation du dispositif de manipulation (R) dans un plan horizontal, en direction d'une coordonnée x de la marchandise unitaire (P) et perpendiculairement à celui-ci en direction d'une coordonnée y de la marchandise unitaire (P), respectivement par butée contre un arrangement mécanique calibré (M), dans une position finale calibrée, la position finale étant respectivement détectée au moyen d'un système capteur (S), la position de consigne de la marchandise unitaire (P) étant déterminée à partir de la déviation connue du dispositif de manipulation (R) et des dimensions connues de la marchandise unitaire, la position réelle de la marchandise unitaire (P) étant déterminée par évaluation des signaux de capteur du système capteur (S), la position réelle de la marchandise unitaire (P) étant comparée à la position de consigne de la marchandise unitaire (P) et l'écart entre le point de préhension réel et le point de préhension de consigne étant calculé à partir de là, un système capteur tactile (ST) étant utilisé comme système capteur (S) et, lors de la butée, la déviation d'un élément de compensation prévu entre une partie de bras externe d'un bras de robot (R) du dispositif de manipulation (R) et le système de préhension (G) étant mesurée au moyen du système capteur (S).

2. Robot de préparation de commandes mobile (1) destiné à mettre en œuvre le procédé selon la revendication 1, le robot de préparation de commandes (1) disposant d'un dispositif de manipulation (R) pourvu d'un système de préhension (G) destiné à saisir les marchandises unitaires (P), ainsi que d'un système capteur (S) et d'un dispositif de traitement de données (D) en liaison active avec le système capteur (S), le système capteur (S) étant configuré pour mesurer la marchandise unitaire (P) et le dispositif de traitement de données (D) étant conçu pour effectuer une détermination de point de préhension, un point de préhension de consigne de la marchandise unitaire (P) saisie, prédéterminé dans le dispositif de traitement de données (D), étant comparé à un point de préhension réel de la marchandise unitaire (P) saisie, **caractérisé en ce que** le système capteur (S) comprend un système capteur tactile (ST), une position finale calibrée étant prévue, dans laquelle la marchandise unitaire (P) saisie peut être amenée respectivement par déviation du dispositif de manipulation (R) dans un plan horizontal, en direction d'une coordonnée x de la pièce (P) et perpendiculairement à celui-ci en direction d'une coordonnée y de la marchandise unitaire (P), le système capteur (S) étant disposé dans la zone de la position finale, la position finale calibrée étant réalisée sous la forme d'un arrangement mécanique (M) avec lequel la marchandise unitaire (P) saisie peut être mise en butée par déviation du dispositif de manipulation (R), le dispositif de manipulation (R) disposant d'un bras de robot (R), un élément de compensation étant disposé entre le bras de robot (R) et le système de préhension (G), lequel permet des mouvements relatifs entre le bras de robot (R) et le système de préhension (G), et le système capteur (S) étant disposé dans la zone de l'élément de compensation et étant configuré pour mesurer la déviation de l'élément de compensation lors de la butée.
